# EUROPÄISCHE PATENTSCHRIFT

(11) **EP 1 619 935 B1**
(45) Veröffentlichungstag und Bekanntmachung des Hinweises auf die Patenterteilung: **28.11.2007**
(21) Anmeldenummer: 05014709.9
(22) Anmeldetag: 06.07.2005
(51) Int. Cl.: H05B 37/02, H05B 41/00, H02J 9/00

(54) **Notlichtvorschaltelement mit digital adressierbarer Steuerschnittstelle**
Emergency lighting power supply unit with digital addressable control interface
Element lumineux de secours avec interface de commande numérique

(30) Priorität: 22.07.2004 DE 102004035678
(43) Veröffentlichungstag der Anmeldung: 25.01.2006
(73) Patentinhaber: Patent -Treuhand-Gesellschaft für elektrische Glühlampen mbH, 81543 München (DE)
(72) Erfinder: Huber, Andreas, 83301 Traunreut (DE)

(56) Entgegenhaltungen:
- EP-A- 0 433 527
- WO-A-00/27013
- DE-A1- 10 344 619
- ANONYM: "Onlite Sicherheitsbeleuchtung Produktbroschüre" INTERNET ARTIKEL, [Online] 28. Februar 2003 (2003-02-28), XP002351213 Gefunden im Internet: URL:http://web.archive.org/web/20040321222 020/www.zumtobelstaff.com/onlite/images/di verses/PB_Onlite_DE.pdf> [gefunden am 2005-10-25]
- ANONYM: "Onlite emergeny lighting product brochure" INTERNET ARTIKEL, [Online] 31. März 2004 (2004-03-31), XP002351214 Gefunden im Internet: URL:http://www.zumtobelstaff.com/PDB/tease r/en/onlite.pdf> [gefunden am 2005-10-25]
- ANONYM: "Montage- und Betriebsanleitung Notlichtversorgungsgeräte" INTERNET ARTIKEL, [Online] März 2004 (2004-03), Seiten 1-20, XP002351215 Gefunden im Internet: URL:http://www.zumtobelstaff.com/onlite/im ages/diverses/Montageanleitung_CN_4_LS.pdf > [gefunden am 2005-10-25]

## Beschreibung

### Technisches Gebiet

Die vorliegende Erfindung bezieht sich auf ein Notlichtelement mit einer digital adressierbaren Steuerschnittstelle.

Bei vielen Beleuchtungsaufgaben werden zusätzlich zu elektronischen Vorschaltgeräten für den Normalbetrieb, etwa Vorschaltgeräten, die Niederdruckentladungslampen an Haushaltsnetzspannung betreiben können, so genannte Notlichtelemente vorgesehen. Diese Notlichtelemente sind aus Sicherheitsgründen für den Fall eines Ausfalls der Netzversorgung gedacht und weisen daher eine Batterie oder einen Batterieanschluss und eine Einrichtung zum Erkennen des Notlichtfalls, d. h. des Netzversorgungsausfalls, auf. Im Regelfall ist die Batterie integriert. Unabhängig davon ist jedenfalls ein Vorschaltgerät zum Betrieb einer Lampe an der Batterie vorgesehen, das im Notlichtfall in Betrieb genommen wird. Dieses betreibt dann eine eigens für diesen Zweck vorgesehene oder auch bereits im Normalbetriebsfall verwendete Lampe und sorgt damit für eine Notbeleuchtung.

### Stand der Technik

Solche Notlichtelemente sind an sich bekannt, insbesondere auch als komplette Leuchten mit der im Notlichtfall zu betreibenden Lampe.

Ferner ist bekannt, dass solche Notlichtelemente innerhalb größerer Beleuchtungsanlagen eingesetzt werden, bei denen sich die Notwendigkeit einer Beleuchtung auch im Falle eines Versorgungsausfalls häufig in besonderem Maße stellt, etwa um eine Evakuierung sicherzustellen oder eine Panik oder Unfälle zu vermeiden.

Schließlich sind in jüngster Zeit Beleuchtungsanlagen bekannt geworden, die über digitale Steuersignale gesteuert werden, bei denen die verwendeten Vorschaltgeräte also digital adressierbare Schnittstellen zum Empfangen von Steuersignalen aufweisen.

### Darstellung der Erfindung

Der vorliegenden Erfindung liegt damit das technische Problem zugrunde, ein vorteilhaftes Notlichtelement anzugeben, das sich gut für die Verwendung in einer digital gesteuerten Beleuchtungsanlage eignet.

Die Erfindung richtet sich auf ein Notlichtelement mit einem Batterieanschluss, einer Einrichtung zum Erkennen eines Netzversorgungsausfalls und einem für den Batteriebetrieb einer Lampe ausgelegten elektronischen Vorschaltgerät, dadurch gekennzeichnet, dass das Notlichtelement eine digital adressierbare Steuerschnittstelle und einen Steuerausgang für ein elektronisches Vorschaltgerät für Normalbetrieb aufweist und dazu ausgelegt ist, das elektronische Vorschaltgerät für Normalbetrieb im Normalbetrieb über die digital adressierbare Steuerschnittstelle steuern zu lassen.

Die Erfindung sieht also vor, ein Notlichtelement einerseits mit einer digital adressierbaren Steuerschnittstelle auszustatten, darüber hinaus aber auch noch einen Steuerausgang für ein elektronisches Vorschaltgerät für den Normalbetrieb (im Folgenden der Kürze halber Normalbetrieb-EVG) vorzusehen. Es ist also eine Ansteuerung eines Normalbetrieb-EVG über das erfindungsgemäße Notlichtelement vorgesehen. Damit kann auf eine separate digital adressierbare Steuerschnittstelle des Normalbetrieb-EVG verzichtet werden, so dass ein gewisser technischer Aufwand, vor allem jedoch eine digitale Adresse, eingespart werden.

Ferner lassen sich, wie das Ausführungsbeispiel weiter unten verdeutlicht, flexible Lösungen finden, die insbesondere auch günstige Möglichkeiten für Funktionstests bieten.

Bei einer vorteilhaften Ausführungsform weist das Notlichtelement einerseits einen Anschluss für eine im Notlichtfall zu betreibende Lampe auf, der mit dem für den Batteriebetrieb ausgelegten EVG innerhalb des Notlichtelements verbindbar ist. Ferner weist das Notlichtelement hierbei jedoch auch einen Anschluss für das Normalbetrieb-EVG auf, über den dieses diese Lampe im Normalbetrieb betreiben kann. Es wird also im Notlichtfall vom Lampenbetrieb durch das Normalbetrieb-EVG auf das "Notlicht-EVG" innerhalb des Notlichtelements umgeschaltet.

Vorteilhafterweise ist die Lampe integriert, handelt es sich also insgesamt um eine Notlichtleuchte. Ebenfalls vorteilhafterweise ist das Normalbetrieb-EVG integriert. Damit handelt es sich entweder um eine kombinierte Normalbetrieb-/Notlichtleuchte oder, wenn keine Lampe integriert ist, um ein kombiniertes Normalbetrieb-/Notlicht-EVG. Natürlich bezieht sich die Erfindung aber auch auf Ausführungsformen, bei denen die Lampe und/oder das Normalbetrieb-EVG extern vorgesehen sind und an das Notlichtelement lediglich angeschlossen werden können.

Eine spezifische Ausführungsform der Erfindung sieht einen steuerbaren Versorgungsausgang für das Normalbetrieb-EVG vor. Der Begriff Steuerausgang beinhaltet hier also nicht nur ausschließliche Steuersignalausgänge, sondern auch Ausgänge, die unter anderem Steuerfunktionen haben, d. h. Steuervorgänge des Notlichtelements ausgeben. Es kann sich insbesondere um einen Versorgungsausgang, etwa einen Phasenausgang handeln, der auch bei weiterhin vorhandener Netzversorgung in gesteuerter Weise innerhalb des Notlichtelements abschaltbar ist. Dies soll selbst für den Fall gelten, dass das Notlichtelement, wie bevorzugt, über einen Eingang für eine extern geschaltete Netzversorgung (insbesondere Phase) verfügt. Das Abschalten dieses Versorgungsausgangs für das Normalbetrieb-EVG erfolgt ansprechend auf Steuersignale, die über die digital adressierbare Schnittstelle eingehen.

Bei dieser Ausführungsform kann das Notlichtelement innerhalb (zumindest teilweise) digital gesteuerter Beleuchtungsanlagen zusammen mit einem konventionellen Normalbetrieb-EVG verwendet werden, das selbst nicht digital adressierbar ist. Dieses Normalbetrieb-EVG kann dann beispielsweise über die bereits erwähnte extern geschaltete Phase ein- und ausgeschaltet werden, die jedoch über das Notlichtelement angeschlossen wird. Dabei kann das Notlichtelement ansprechend auf digitale Steuersignale diese Versorgung des Normalbetrieb-EVG abschalten. Damit können beispielsweise über die digitale Steuerung ablaufende Funktionstests der Notlichtfunktionen erfolgen, bei denen dann das oder die Normalbetrieb-EVG abgeschaltet werden müssen, obwohl die eigentliche Netzversorgung weiterhin vorhanden ist.

Bei einer anderen vorteilhaften Ausgestaltung, die aber durchaus zusätzlich zu der bereits beschriebenen vorhanden sein kann, ist der Steuerausgang ein separater digitaler Ausgang. Bevorzugt ist insbesondere, die in die digital adressierbare Schnittstelle eingehenden digitalen Steuersignale als solche an das Normalbetrieb-EVG weiterzugeben, das in diesem Fall ebenfalls über eine digital adressierbare Schnittstelle eines identischen oder kompatiblen Typs verfügt. Im Prinzip ist jedoch auch denkbar, dass das Notlichtelement anders geartete digitale Steuersignale erzeugt und an das Normalbetrieb-EVG ausgibt. In dem bevorzugten Fall einer Weitergabe der digitalen Steuersignale werden diese vorzugsweise jedoch intern auf Relevanz für das Notlichtelement selbst geprüft. Ferner kann das Notlichtelement bestimmte Betriebs- und Konfigurationsparameter des Normalbetrieb-EVG periodisch abfragen und in einem internen Speicher vorhalten, um Rückfragen über den Zustand des Normalbetrieb-EVG ohne oder mit geringer Zeitverzögerung beantworten zu können.

Das erfindungsgemäße Notlichtelement kann auch mit einer Mehrzahl Normalbetrieb-EVG kombiniert sein, ob diese nun integriert sind oder extern. Diese können auch über ein und denselben Steuerausgang angesteuert werden, im Fall des separaten digitalen Steuerausgangs also im Sinn einer Busleitung und im Fall des die Versorgungsleitung schaltenden Steuerausgangs im Sinn einer Parallelschaltung.

Neben den bereits erwähnten Möglichkeiten von Funktionstests über die zentrale digitale Steuerung der Beleuchtungsanlage weist das Notlichtelement vorzugsweise weitere Anschlüsse für ein Funktionstestgerät auf, das lokal angeschlossen wird, um das individuelle Notlichtelement zu testen. Wo dies gefordert ist, kann somit eine lokale Test- und Anzeigemöglichkeit realisiert werden.

Die Erfindung richtet sich auf elektronische Vorschaltgeräte im allgemeinsten Sinn, also auf jede Form von Betriebsgeräten für Lampen. Der bevorzugte und praktisch relevanteste Fall sind jedoch EVG für Niederdruckentladungslampen, etwa in Röhrenform oder als so genannte Energiesparlampen.

### Kurze Beschreibung der Zeichnung(en)

Im Folgenden wird ein Ausführungsbeispiel näher erläutert, wobei die Einzelmerkmale auch in anderen Kombinationen erfindungswesentlich sein können. Es wird ferner vorsorglich darauf hingewiesen, dass sich die vorstehende und die folgende Beschreibung implizit auch als Offenbarung eines Verfahrens zum Herstellen des Notlichtelements und eines Verfahrens zum Betreiben des Notlichtelements, entsprechender Leuchten und der Beleuchtungsanlage verstehen lässt.
- Figur 1: zeigt ein erfindungsgemäßes Notlichtelement mit angeschlossener Lampe.
- Figur 2: zeigt das Notlichtelement aus Figur 1 mit zusätzlich angeschlossenem Normalbetrieb-EVG und weiterer Lampe.
- Figur 3: zeigt das Notlichtelement aus den Figuren 1 und 2 mit zwei digital adressierbaren Normalbetrieb-EVG und insgesamt drei Lampen.
- Figur 4: zeigt den internen Aufbau des Notlichtelements aus den Figuren 1-3.

### Bevorzugte Ausführung der Erfindung

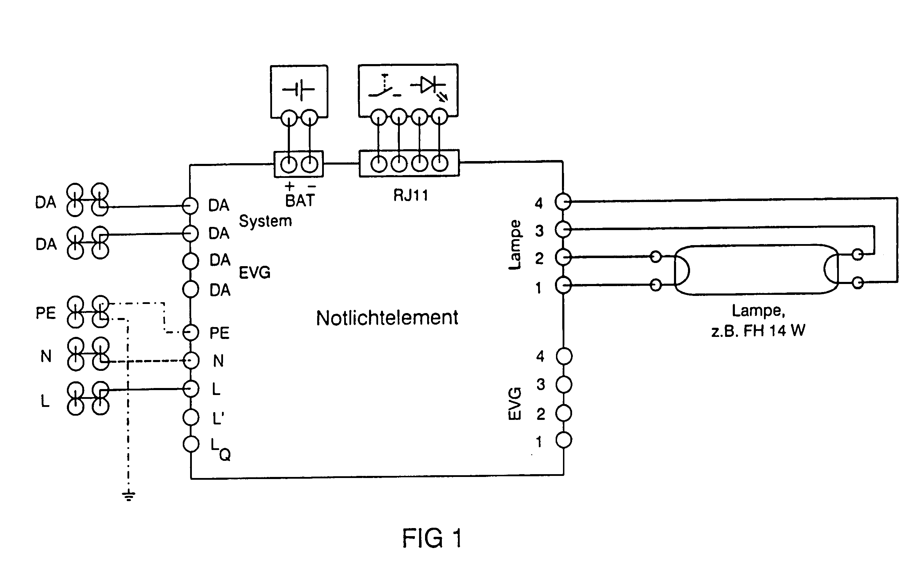

Figur 1 zeigt ein erfindungsgemäßes Notlichtelement in einer besonders einfachen Anwendungssituation. Das Notlichtelement ist bei diesem Ausführungsbeispiel Teil einer Notlichtleuchte und betreibt die rechts eingezeichnete röhrenförmige Niederdruckentladungslampe des Typs FH 14W. Es enthält ferner ein in Figur 1 nicht näher dargestelltes Notlicht-EVG und eine oben links angeschlossene Batterie zur Versorgung desselben.

Die Notlichtlampe wird über Lampenanschlüsse mit den Bezeichnungen Lampe 1 bis 4 betrieben und bei der hier dargestellten Anwendung lediglich als Notlichtlampe verwendet.

Im linken oberen Bereich sind mit DA bezeichnete Anschlüsse eingezeichnet, die nach DA-System und DA-EVG differenziert sind. An den Anschlüssen DA-System sind externe Leitungen angeschlossen, nämlich Steuersignalleitungen eines digitalen zentralen Steuersystems. Es handelt sich hier um die Steuerung einer größeren Beleuchtungsanlage, die nach dem so genannten DALI-Standard (digital addressable lighting interface) über jeweilige digital adressierbare Schnittstellen die angeschlossenen Geräte steuert. Auf die Bedeutung der Anschlüsse DA-EVG wird im weiteren Verlauf noch eingegangen.

Ferner enthält das Notlichtelement Versorgungsleitungen, nämlich eine Phase L, einen Neutralleiter N und eine Erde PE, die an gleichlautende Anschlüsse angeschlossen sind. Auf die Bedeutung der nichtbelegten Anschlüsse L' und L_{Q} wird noch näher eingegangen.

Ferner ist oben mittig ein mit RJ11 bezeichneter Anschluss vorgesehen, der zum Anschluss eines externen Testgeräts für lokale Funktionstests des Notlichtelements dient. Das Testgerät ist mit einem Schaltersymbol und einem Leuchtdiodensymbol dargestellt.

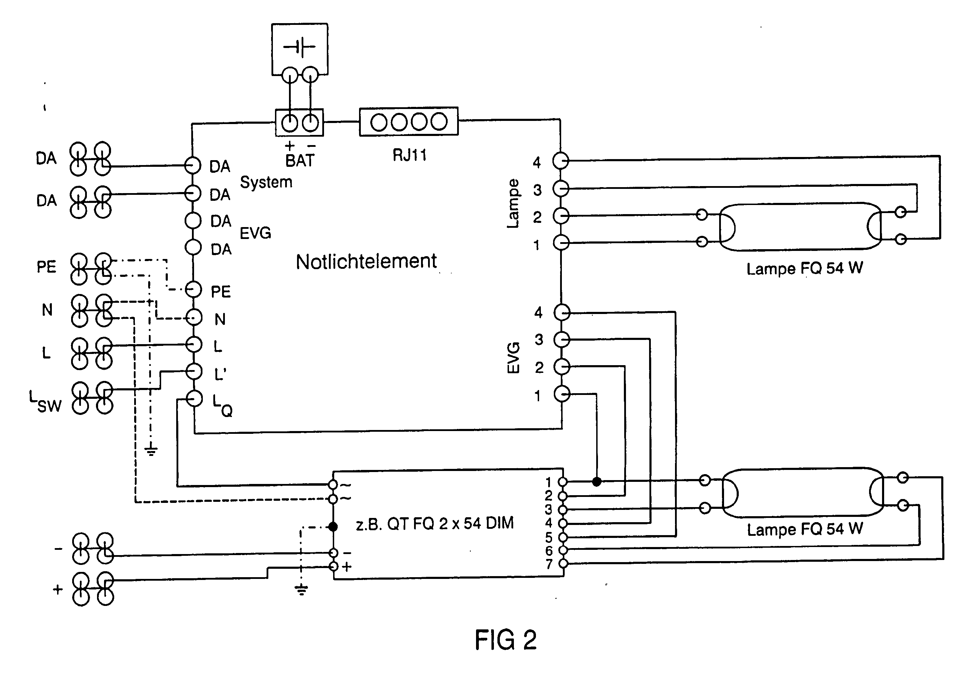

Bei diesem Anwendungsfall handelt es sich also um eine Notlichtleuchte, die nur bei Netzspannungsausfall, der am Eingang L detektiert wird, die dargestellte Lampe über die Batterie BAT in Betrieb nimmt. Diese Notlichtleuchte ist hierbei digital konfigurierbar und überwachbar. Die eigentlich für die Erfindung kennzeichnende Möglichkeit der Steuerung eines Normalbetrieb-EVG ist hier zwar vorgesehen (Anschlüsse L_{Q} und EVG 1-4), jedoch bei diesem Beispiel nicht genutzt. Eine Nutzungsmöglichkeit mit einem externen EVG entspräche Figur 2.

Im Anwendungsfall aus Figur 2 ist das Notlichtelement zusätzlich über die Anschlüsse EVG 1-4 mit einem dimmbaren Normalbetrieb-EVG für zwei 54W Lampen, hier des Typs QT FQ 2x54 DIM verbunden.

Dieses Normalbetrieb-EVG kann über die Anschlüsse EVG 1-4 die bereits erwähnte Notlichtlampe im Normalbetriebsfall betreiben. Ferner kann das Normalbetrieb-EVG eine rechts neben ihm eingezeichnete weitere Lampe gleichen Typs betreiben, die jedoch im Notlichtfall nicht betrieben wird. Es handelt sich also um eine zweilampige Leuchte mit Notlichtfunktion.

Dieses konventionelle EVG wird einerseits direkt über den Neutralleiter N aus der Netzversorgung und andererseits über den Phasenausgang L_{Q} des Notlichtelements versorgt. Der Phasenausgang L_{Q} ist schaltbar mit dem Phaseneingang L' des Notlichtelements verbunden, der über die Leitung L_{SW} versorgt wird. Es handelt sich hierbei um eine extern geschaltete Phase, die also im Gegensatz zu der Dauerversorgungsphase L abgeschaltet werden kann, um das erwähnte Normalbetrieb-EVG zu steuern. Zusätzlich ist die interne Verbindung zwischen den Anschlüssen L' und L_{Q} in dem Notlichtelement schaltbar, so dass ein digitales Steuersignal (beispielsweise über die Anschlüsse DA-System) die Verbindung zwischen L' und L_{Q} öffnen kann. Bei einem über die digitale Steuerung durchgeführten Systemtest kann also das Normalbetrieb-EVG ausgeschaltet werden, obwohl kein Notlichtfall vorliegt, also die Dauerphase L aktiv ist, und zudem nicht einmal die extern geschaltete Phase L_{SW} extern ausgeschaltet wurde. Damit kann über die digitale Steuerung in dem Notlichtelement ein Notlichtfall simuliert werden, ohne dass das Normalbetrieb-EVG die digitalen Steuersignale selbst umsetzen müsste.

Im unteren linken Bereich ist ferner ein weiterer analoger Anschluss des Normalbetrieb-EVG dargestellt, bei dem es sich beispielsweise um einen Dimmsteueranschluss handeln kann.

Dieses Beispiel zeigt also insbesondere eine zweilampige Notlichtleuchte in einer Beleuchtungsanlage mit einer gemischten digital/analogen Steuerung. Der Steuerausgang zur Steuerung des Normalbetrieb-EVG ist der geschaltete Phasenausgang L_{Q}, der von dem Notlichtelement unabhängig von dem Phaseneingang L oder L' ausgeschaltet werden kann, wenn entsprechende Steuersignale über die digital adressierbare Schnittstelle DA-System empfangen werden.

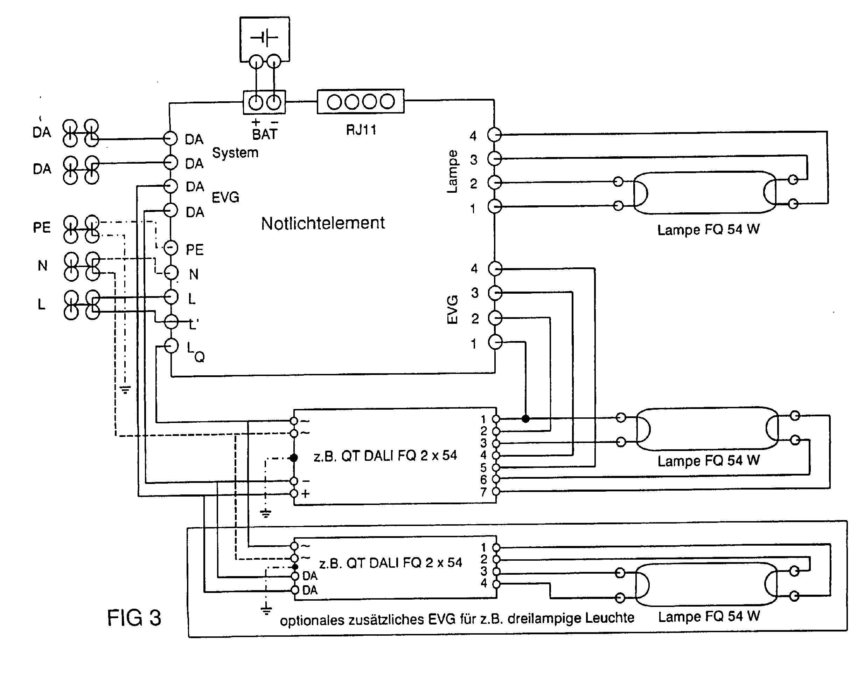

Ein weiteres Beispiel in Figur 3 zeigt das Notlichtelement aus den vorherigen Figuren zusammen mit einem weiteren zusätzlichen Normalbetrieb-EVG. Es kann sich also insgesamt um eine dreilampige Leuchte mit Notlichtfunktion handeln oder es könnte das dritte EVG als externes EVG an eine zweilampige Leuchte mit Notlichtfunktion angeschlossen sein.

Ferner sind in diesem Fall beide Normalbetrieb-EVG, und zwar hier des Typs QT DALI FQ 2x54 bzw. QT DALI FQ 1x54, digital adressierbar. Hier kann also die Leuchte einschließlich des möglicherweise externen dritten EVG digital gesteuert und überwacht werden. Dabei werden sämtliche DALI-Befehle von dem Notlichtelement an die DALI-EVG weitergereicht. Die von dem digitalen Steuergerät der Anlage empfangenen Kommandos müssen dabei von dem Notlichtelement interpretiert und teilweise selbst ausgeführt werden. Um Statusabfragen des Steuergeräts einerseits und Rückfragen der DALI-EVG andererseits richtig beantworten zu können, muss das Notlichtelement ferner die empfangenen Steuerbefehle speichern und selbst periodisch den Zustand der nachgeschalteten EVG ermitteln und speichern. Zudem müssen natürlich die notlichtspezifischen DALI-Kommandos bearbeitet werden und ständig der Batteriezustand und die Netzspannung überwacht werden. Das Notlichtelement hat hier also die Funktion eines DALI-gesteuerten Notlichtelements mit integriertem Steuergerät für weitere DALI-EVG.

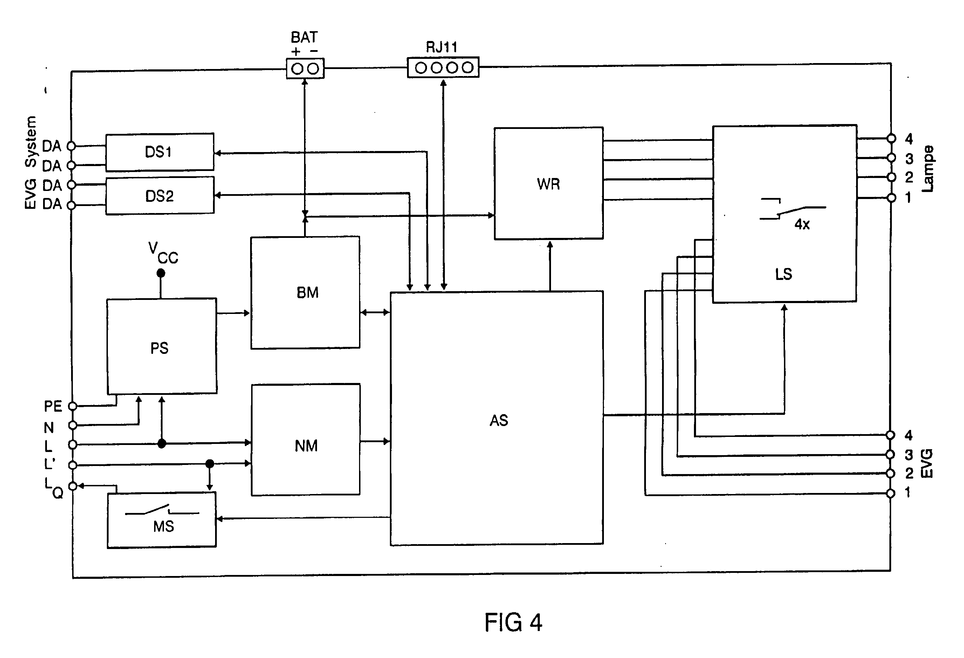

Figur 4 zeigt den internen Aufbau des Notlichtelements aus den Figuren 1-3. Die Bezeichnung der Anschlüsse entspricht den genannten Figuren. Die einzelnen Funktionsblöcke haben im Wesentlichen folgende Funktion:

Die digital adressierbare Schnittstelle ist mit DS1 bezeichnet. Eine weitere digitale Schnittstelle DS2 dient der Kommunikation mit den DALI-EVG.

Der Block PS erzeugt aus der bereits erwähnten Netzversorgung die internen Versorgungsspannungen.

Der Block BM enthält die Lade- und Überwachungselektronik für das Batteriemanagement und ist daher zum einen mit dem Block PS und zum anderen mit dem Batterieanschluss BAT verbunden.

Das Kürzel NM steht für Netzmonitor. Dieser überwacht die anliegende Netzspannung und erfasst damit das Vorliegen einer Notlichtsituation. Der Netzmonitor erfasst ferner den Zustand des geschalteten Netzeingangs L'. Die überwachten Funktionen werden an die noch im Folgenden beschriebene digitale Ablaufsteuerung AS weitergegeben.

Der Block MS schaltet die Versorgungsspannung des in Figur 2 an den Anschluss L_{Q} angeschlossenen EVG, bildet also den Schalter zwischen den Anschlüssen L' und L_{Q} und wird von der Ablaufsteuerung AS angesteuert.

WR steht für einen Wechselrichter, nämlich ein auf den Batteriebetrieb optimiertes EVG für den Betrieb der angeschlossenen Niederdruckentladungslampe (z. B. FQ 54W) im Notlichtfall, ggf. mit reduzierter Leistung. Daher ist der Wechselrichter mit dem Batterieanschluss BAT verbunden und wird andererseits von der Ablaufsteuerung AS gesteuert.

LS bezeichnet einen mehrpoligen Umschalter, der im Notlichtbetrieb die oben rechts angeschlossene Lampe von dem an die Anschlüsse EVG 1-4 angeschlossenen Normalbetrieb-EVG abkoppelt und mit dem Wechselrichter WR verbindet.

AS bezeichnet schließlich die zentrale digitale Ablaufsteuerung, die unter anderem die zur digitalen DALI-Kommunikation notwendigen Software-Elemente, notwendige Taktgeber und eine Entscheidungslogik für den Wechsel zwischen Normal- und Notlichtbetrieb enthält.

Insgesamt kann das Notlichtelement aus Figur 4 in in den Figuren 1-3 illustrierter Weise zur Steuerung von Normalbetrieb-EVG verwendet werden und belegt dabei in jedem Fall nur eine digitale Adresse. Es erlaubt dabei in allen Fällen von der zentralen digitalen Steuerung ausgelöste und überwachte Testabläufe einschließlich der in manchen Fällen vorgeschriebenen Erzeugung von Ergebnisprotokollen. Ferner können die Tests über den weiteren Anschluss RJ11 auch "manuell" an den Einzelleuchten vorgenommen und kann deren Ergebnis lokal angezeigt werden. Die Normalbetrieb-EVG können extern oder auch integriert ausgeführt sein. Gleiches gilt für die Niederdruckentladungslampen.

## Patentansprüche

1. Notlichtelement mit
- einem Batterieanschluss (BAT),
- einer Einrichtung (NM) zum Erkennen eines Netzversorgungsausfalls,
- einem für den Batteriebetrieb einer Lampe ausgelegten elektronischen Vorschaltgerät (WR),
- einem Anschluss für die Versorgungsleitung (L),
- einem geschalteten Phasenausgang (L_{Q}) zur gesteuerten Versorgung eines elektronischen Vorschaltgeräts für den Normalbetrieb,
**dadurch gekennzeichnet, dass**
- das Notlichtelement eine digital adressierbare Steuerschnittstelle (DA-System) enthält, die zum Anschluss von Steuersignalleitungen eines digitalen, zentralen Steuersystems, das ausschließlich digitale Steuersignale überträgt, geeignet ist sowie einen weiteren Anschluss (DA-EVG) enthält, der zum Übertragen von Daten vom Notlichtelement zu einem elektronischen Vorschaltgerät für den Normalbetrieb mit Steuereingang geeignet ist, wobei
- das Notlichtelement dazu ausgelegt ist, das elektronische Vorschaltgerät für Normalbetrieb im Normalbetrieb über die digital adressierbare Steuerschnittstelle (DA-System) zu steuern.

2. Notlichtelement nach Anspruch 1 mit einem Lampenanschluss (Lampe 1-4), über den die im Notlichtfall zu betreibende Lampe im Normalbetrieb über das elektronische Vorschaltgerät für Normalbetrieb betreibbar ist, und mit einem Normalbetrieb-EVG-Anschluss (EVG 1-4), Ober den ein Versorgungsausgang des elektronischen Vorschaltgeräts für Normalbetrieb mit dem Notlichtelement verbindbar ist.

3. Notlichtelement nach Anspruch 1 oder 2, bei dem der Phasenausgang (L_{Q}) ein Ausgang zur Leistungsversorgung des elektronischen Vorschaltgeräts für Normalbetrieb ist, der auf über die digital adressierbare Steuerschnittstelle (DS1, DA-System) eingehende Steuersignale ansprechend abgeschaltet (MS) werden kann.

4. Notlichtelement nach Anspruch 3 mit einem weiteren Eingangsanschluss (L') für eine extern geschaltete Versorgungsleitung (L_{SW}), welcher weitere Versorgungseingang (L') mit dem Phasenausgang (L_{Q}) verbindbar (MS) ist,

5. Notlichtelement nach einem der vorstehenden Ansprüche, bei dem der Steuerausgang (DS2, DA-EVG) für das elektronische Vorschaltgerät für Normalbetrieb digital ist und über die digital adressierbare Steuerschnittstelle (DS1, DA-System) eingehende Steuersignale an das elektronische Vorschaltgerät für Normalbetrieb weiterreicht.

6. Notlichtelement nach einem der vorstehenden Ansprüche mit einem zusätzlichen Anschluss (RJ11) für ein Funktionstestgerät zur Durchführung eines Iokalen Funktionstests.

7. Notlichtelement nach einem der vorstehenden Ansprüche, bei dem die elektronischen Vorschaltgeräte für Niederdruckentladungslampen ausgelegt sind.

8. Notlichtleuchte mit einem Notlichtelement nach einem der vorstehenden Ansprüche und der Notlichtlampe.

9. Notlichtleuchte nach Anspruch 8, in der das elektronische Vorschaltgerät für den Normalbetrieb integriert ist.

10. Notlichtleuchte nach Anspruch 8 oder 9 mit zwei oder mehr Lampen.

## Claims

1. Emergency light element having
- a battery connection (BAT),
- a device (NM) for the purpose of detecting a failure in the power supply system,
- an electronic ballast (WR) which is designed for battery operation of a lamp,
- a connection for the power supply line (L),
- a connected phase output (L_{Q}) for the controlled supply of an electronic ballast for normal operation,
**characterized in that**
- the emergency light element contains a digital addressable control interface (DA system), which is suitable for connecting control signal lines of a digital central control system, which only transmits digital control signals, and contains a further connection (DA EB), which is suitable for transmitting data from the emergency light element to an electronic ballast for normal operation with a control input,
- the emergency light element being designed to control the electrical ballast for normal operation, during normal operation, via the digital addressable control interface (DA system).

2. Emergency light element according to Claim 1 having a lamp connection (lamp 1-4), by means of which the lamp to be operated in an emergency lighting situation can be operated during normal operation by means of the electronic ballast for normal operation, and having a normal-operation EB connection (EB 1-4), by means of which a supply output of the electronic ballast for normal operation can be connected to the emergency light element.

3. Emergency light element according to Claim 1 or 2, in which the phase output (L_{Q}) is an output for the purpose of supplying power to the electronic ballast for normal operation, which can be disconnected (MS) in response to control signals entering via the digital addressable control interface (DS1, DA system).

4. Emergency light element according to Claim 3, having a further input connection (L') for an externally connected supply line (L_{SW}), which further supply input (L') can be connected (MS) to the control output (L_{Q}).

5. Emergency light element according to one of the preceding claims, in which the control output (DS2, DA EB) for the electronic ballast for normal operation is digital, and passes on control signals entering via the digital addressable control interface (DS1, DA system) to the electronic ballast for normal operation.

6. Emergency light element according to one of the preceding claims having an additional connection (RJ11) for a function test device for the purpose of carrying out a local function test.

7. Emergency light element according to one of the preceding claims, in which the electronic ballasts are designed for low-pressure discharge lamps.

8. Emergency luminaire having an emergency light element according to one of the preceding claims and the emergency light lamp.

9. Emergency luminaire according to Claim 8, in which the electronic ballast for normal operation is integrated.

10. Emergency luminaire according to Claim 8 or 9 having two or more lamps.

## Revendications

1. Élément lumineux de secours ayant
- une borne de batterie (BAT),
- un dispositif (NM) pour la détection d'une panne d'alimentation de réseau,
- un ballast électronique (WR) conçu pour le fonctionnement sur batterie d'une lampe,
- une borne pour la ligne d'alimentation (L),
- une sortie de phase commutée (L_{Q}) pour l'alimentation commandée d'un ballast électronique pour le fonctionnement normal,
**caractérisé par le fait que**
- l'élément lumineux de secours comporte une interface de commande numérique (système DA), qui convient au raccordement de lignes de signaux de commande d'un système de commande numérique centrale qui transmet exclusivement des signaux de commande numériques, ainsi qu'une autre borne (ballast DA) qui convient à la transmission de données de l'élément lumineux de secours à un ballast électronique pour le fonctionnement normal avec entrée de commande,
- l'élément lumineux de secours étant conçu pour que le ballast électronique destiné au fonctionnement normal puisse être commandé lors du fonctionnement normal par l'intermédiaire de l'interface de commande numérique (système DA).

2. Élément lumineux de secours selon la revendication 1 avec une borne de lampe (lampe 1 à 4), par l'intermédiaire de laquelle la lampe à faire fonctionner en cas d'éclairage de secours peut fonctionner lors du fonctionnement normal par l'intermédiaire du ballast électronique destiné au fonctionnement normal, et avec une borne de ballast de fonctionnement normal (ballast 1 à 4), par l'intermédiaire de laquelle une sortie d'alimentation du ballast électronique destiné au fonctionnement normal peut être reliée à l'élément lumineux de secours.

3. Élément lumineux de secours selon la revendication 1 ou 2, dans lequel la sortie de phase (L_{Q}) est une sortie qui est prévue pour l'alimentation en puissance du ballast électronique destiné au fonctionnement normal et qui peut être coupée (MS) en réponse à des signaux de commande entrant par l'intermédiaire de l'interface de commande numérique (DS1, système DA).

4. Élément lumineux de secours selon la revendication 3, avec une autre borne d'entrée (L') qui est prévue pour une ligne d'alimentation commutée à l'extérieur (L_{SW}), laquelle autre entrée d'alimentation (L') peut être reliée (MS) à la sortie de phase (L_{Q}).

5. Élément lumineux de secours selon l'une des revendications précédentes, dans lequel la sortie de commande (DS2, ballast DA) pour le ballast électronique destiné au fonctionnement normal est numérique et retransmet des signaux de commande entrant par l'intermédiaire de l'interface de commande numérique (DS1, système DA) au ballast électronique destiné au fonctionnement normal.

6. Élément lumineux de secours selon l'une des revendications précédentes, avec une borne supplémentaire (RJ11) pour un appareil de test de fonctionnement pour la mise en oeuvre d'un test de fonctionnement local.

7. Élément lumineux de secours selon l'une des revendications précédentes, dans lequel les ballasts électroniques sont conçus pour des lampes à décharge à basse pression.

8. Éclairage de secours ayant un élément lumineux de secours selon l'une des revendications précédentes et avec la lampe de secours.

9. Éclairage de secours selon la revendication 8, dans lequel est intégré le ballast électronique destiné au fonctionnement normal.

10. Éclairage de secours selon la revendication 8 ou 9, ayant au moins deux lampes.
